# EUROPÄISCHE PATENTANMELDUNG

(11) **EP 1 024 068 A2**
(43) Veröffentlichungstag der Anmeldung: **02.08.2000**
(21) Anmeldenummer: 99124719.8
(22) Anmeldetag: 11.12.1999
(51) Int. Cl.: B60S 1/48

(54) **Reinigungsanlage und Verfahren zum Betrieb einer Reinigungsanlage**

(30) Priorität: 26.01.1999 DE 19902900
(71) Anmelder: ROBERT BOSCH GMBH, 70442 Stuttgart (DE)
(72) Erfinder: Simmes, Dirk, 77836 Greffern (DE)

(57) **Zusammenfassung**

Die Erfindung betrifft eine Reinigungsanlage für Fahrzeugscheiben oder dergleichen von Kraftfahrzeugen, mit einer hydraulischen Fördereinrichtung, die unter Druckerhöhung ein Fluid von einem Vorratsbehälter zu wenigstens einer Austrittsvorrichtung fördert, und ein Verfahren zum Betrieb einer Reinigungsanlage für Fahrzeugscheiben oder dergleichen in Kraftfahrzeugen.

Es ist vorgesehen, daß der Fördereinrichtung (12) eine Steuerungseinrichtung (30) zugeordnet ist, mittels der der Förderdruck der Fördereinrichtung (12) in Abhängigkeit einer Fahrzeuggeschwindigkeit steuerbar ist.

## Beschreibung

Die Erfindung betrifft eine Reinigungsanlage zum Betrieb einer Reinigungsanlage für Fahrzeugscheiben oder dergleichen von Kraftfahrzeugen mit den im Oberbegriff des Anspruchs 1 genannten Merkmalen und ein Verfahren zum Betrieb einer Reinigungsanlage für Fahrzeugscheiben oder dergleichen von Kraftfahrzeugen mit den im Oberbegriff des Anspruchs 4 genannten Merkmalen.

### Stand der Technik

Reinigungsanlagen der gattungsgemäßen Art sind bekannt. Sie dienen insbesondere zur Reinigung von Fahrzeugscheiben oder dergleichen bei Kraftfahrzeugen. Dabei wird mittels einer hydraulischen Fördereinrichtung ein Fluid von einem Vorratsbehälter zu wenigstens einer Austrittsvorrichtung gefördert. Eine Auslegung der einzelnen Komponenten der Reinigungsanlage ist in hohem Maße variabel und wird im weiteren nicht näher erläutert. Eine wichtige Gemeinsamkeit ist lediglich, daß die Austrittsvorrichtung einem zu reinigenden Objekt derart zugeordnet ist, daß nach Austritt des Fluids dieses das zu reinigende Objekt benetzt.

Ferner kann einer solchen Reinigungsanlage beispielsweise eine Wischeinrichtung zugeordnet werden. Beispielhaft sei hier eine Scheibenwischanlage oder eine Scheinwerferwischanlage erwähnt. Das Fluid wird dann durch einen Wischer auf den Fahrzeugscheiben verteilt. Je nach Auslegung der Wischeinrichtung gibt es dabei optimale Positionen, in denen das Fluid auf die Fahrzeugscheibe treffen soll, um einen geringen Verbrauch bei zufriedenstellender Reinigung zu gewähren.

Weiterhin ist bekannt, die Austrittsvorrichtung derart auszulegen, daß das Fluid als ein Strahl mit einer bestimmten Geschwindigkeit und einem bestimmten Winkel austritt - üblicherweise über eine Düse der Austrittsvorrichtung. Dabei bestimmen Winkel und Geschwindigkeit des Fluids eine Position, in der der Strahl auf das zu reinigende Objekt trifft.

Nachteilig bei den bekannten Reinigungsanlagen ist, daß es infolge einer Überlagerung einer Fahrzeuggeschwindigkeit und des auftretenden Fahrtwindes zu einer Änderung der Geschwindigkeit des Fluids kommt, so daß auf diese Weise der Strahl das zu reinigende Objekt an einer anderen Position trifft. Dies wird insbesondere von einem Fahrzeugführer als störend empfunden, wenn es sich bei dem zu reinigenden Objekt um eine Fahrzeugscheibe, beispielsweise eine Windschutzscheibe, handelt.

### Vorteile der Erfindung

Erfindungsgemäß wird durch die Reinigungsanlage zum Betrieb einer Reinigungsanlage mit den im Anspruch 1 genannten Merkmalen in einfacher Weise eine Steuerung der Position, in der der Strahl auf das zu reinigende Objekt trifft, ermöglicht. Dadurch, daß der Fördereinrichtung eine Steuerungseinrichtung zugeordnet ist, mittels der der Förderdruck in Abhängigkeit einer Fahrzeuggeschwindigkeit steuerbar ist, kann eine bessere Reinigungswirkung erzielt werden.

Weiterhin ist vorteilhaft, daß mittels der erfindungsgemäßen Reinigungsanlage bei der Reinigung der Fahrzeugscheiben, beispielsweise in Kombination mit der Scheibenwischanlage, wesentlich weniger Fluid benötigt wird. So trifft der Strahl des Fluids unabhängig von der Fahrzeuggeschwindigkeit immer auf die selbe Position auf das zu reinigende Objekt (beispielsweise eine Windschutzscheibe). Damit ist zum einen eine erhöhte Fahrsicherheit gegeben, und zum anderen kann der Vorratsbehälter geringer dimensioniert werden, so daß sich ein Fahrzeuggewicht reduzieren läßt.

Ferner ist vorteilhaft, die Austrittsvorrichtung derart auszugestalten, daß sie eine Düse, insbesondere eine Ventildüse, beinhaltet. Mittels der Düse wird ein fester Winkel vorgegeben, mit dem das Fluid als Strahl austritt. Auf diese Weise kann die Austrittsvorrichtung sehr einfach verwirklicht werden.

Besonders vorteilhaft ist weiterhin, eine Pumpe, insbesondere eine Hochdruckpumpe, als Fördereinrichtung einzusetzen. Für eine solche Pumpe läßt sich mit einer variablen Tastfrequenz einer Versorgungsspannung in einfacher Weise ein jeweils vorgegebener Förderdruck erzeugen.

Mittels der Steuerungseinrichtung wird in Abhängigkeit der Fahrzeuggeschwindigkeit die Tastfrequenz der Versorgungsspannung für die Fördereinrichtung vorgegeben, und es resultiert der gewünschte Förderdruck des Fluids. Dabei kann eine Anpassung der Tastfrequenz an die Fahrzeuggeschwindigkeit in Stufen oder kontinuierlich aus einer Kennlinie erfolgen. Die Fahrzeuggeschwindigkeit wird vorteilhafterweise als ein digitales Signal der Steuerungseinrichtung zur Verfügung gestellt. Die Erzeugung eines solchen digitalen Signals ist bekannt und soll im Rahmen dieser Beschreibung nicht näher erläutert werden.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Darstellung einer Reinigungsanlage und
- Figuren 2 bis 4: schematische Teilausschnitte einer Reinigungsanlage in verschiedenen Betriebszuständen.

### Beschreibung des Ausführungsbeispiels

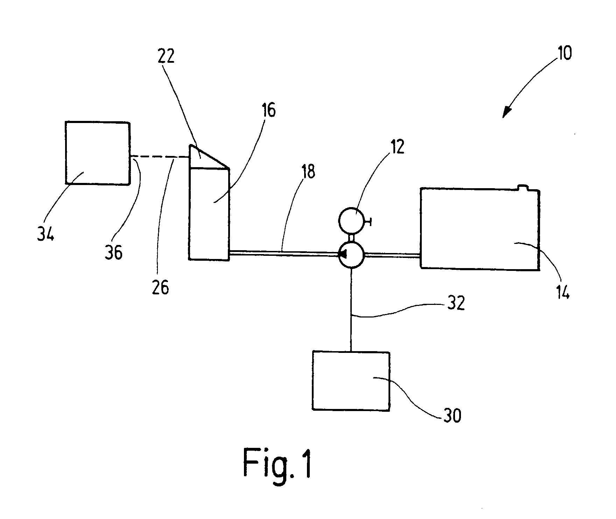

Die Figur 1 zeigt in schematischer Weise eine Reinigungsanlage 10. Die Reinigungsanlage 10 besteht dabei aus einer hydraulischen Fördereinrichtung 12, einem Vorratsbehälter 14 und einer Austrittsvorrichtung 16, die alle über geeignete Leitungen 18 miteinander verbunden sind. In dem Vorratsbehälter 14 befindet sich ein Fluid, das mittels der Fördereinrichtung 12 zur Austrittsvorrichtung 16 gefördert wird.

Die Austrittsvorrichtung 16 umfaßt in dem Ausführungsbeispiel eine Düse 22. Die Düse 22 kann insbesondere eine Ventildüse sein. Über die Düse 22 tritt das geförderte Fluid aus. Dabei kann ein bestimmter Austrittswinkel vorgegeben werden.

Die Fördereinrichtung 12 kann beispielsweise eine Pumpe, insbesondere eine Hochdruckpumpe, sein. Sie muß dabei derart ausgelegt sein, daß sie einen variablen Förderdruck erzeugen kann, beispielsweise über eine Änderung einer Tastfrequenz einer Versorgungsspannung für die Pumpe.

Der Reinigungsanlage 10 ist eine Steuerungseinrichtung 30 zugeordnet, die mit der Fördereinrichtung 12 über eine Datenleitung 32 verbunden ist. Mittels der Steuerungseinrichtung 30 wird die Tastfrequenz vorgegeben und damit der Förderdruck bestimmt. Die Steuerungseinrichtung 30 verfügt ferner über eine hier nicht dargestellte Datenleitung, die zur Übermittlung einer Fahrzeuggeschwindigkeit, beispielsweise in Form eines digitalen Signals, genutzt wird. Die Erzeugung eines solchen digitalen Signals ist bekannt und wird daher nicht näher erläutert.

Die Austrittsvorrichtung 16 ist einem zu reinigenden Objekt 34 derart zugeordnet, daß das Fluid über die Düse 22 als ein Strahl 26 in einer Position 36 das Objekt 34 trifft.

Die Position 36 ist dabei einerseits von dem Austrittswinkel des Fluids und andererseits von dem Förderdruck abhängig. In der erfindungsgemäßen Reinigungsanlage 10 ist dabei der Austrittswinkel festgelegt, so daß eine Steuerung der Position 36 lediglich über den Förderdruck möglich ist.

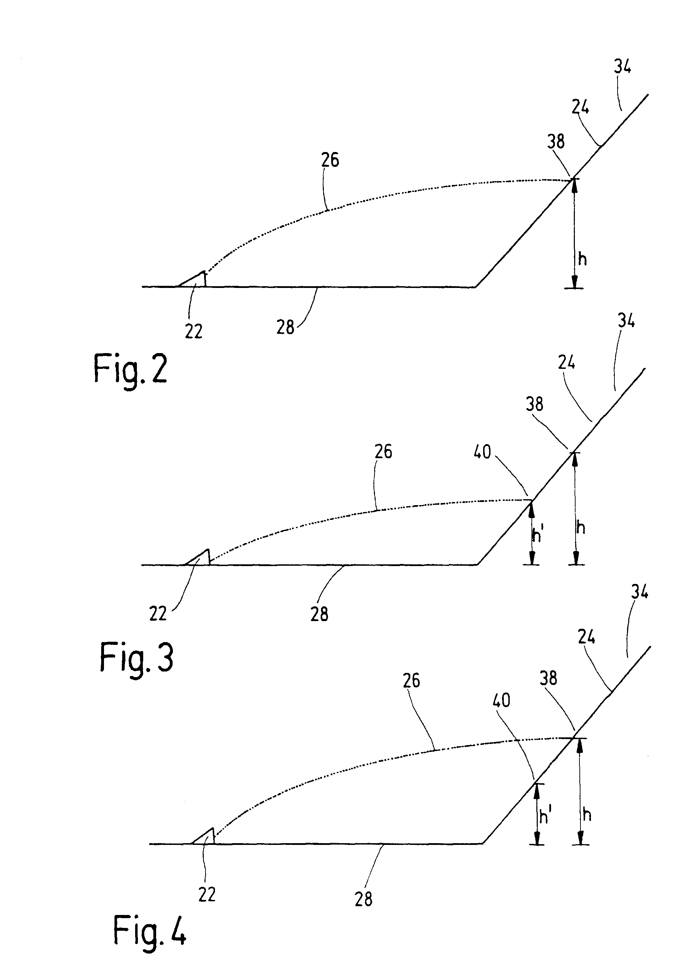

Zur näheren Erläuterung einer Funktionsweise der Reinigungsanlage 10 während verschiedener Betriebszustände eines Kraftfahrzeugs dienen die schematischen Teilausschnitte der Figuren 2 bis 4. Dabei wird jeweils über die Düse 22, die an einer Fahrzeugkarosserie 28 angebracht ist, der Strahl 26 auf das Objekt 34 gelenkt. Das Objekt 34 ist in diesem Ausführungsbeispiel eine Fahrzeugscheibe 24.

In Figur 2 trifft dabei der Strahl 26 die Fahrzeugscheibe 24 in einer Position 38. Die Position 38 wird durch die Austrittsgeschwindigkeit des Fluids bestimmt. Das Kraftfahrzeug befindet sich in diesem Fall im Stillstand, das heißt, eine Fahrzeuggeschwindigkeit ist gleich Null.

In der Figur 3 trifft der Strahl 26 die Windschutzscheibe 24 in einer zweiten Position 40. Dies kann auf zweierlei Weise geschehen. Zum einen kann der Förderdruck gesenkt werden, beispielsweise dadurch, daß die Steuerungseinrichtung 30 eine niedrigere Tastfrequenz der Versorgungsspannung der Fördereinrichtung 12 vorgibt. Zum anderen kann die Position 40, die durch eine Höhe h' charakterisiert ist, durch eine Überlagerung der Fahrzeuggeschwindigkeit mit der Austrittsgeschwindigkeit gegeben sein. Bewegt sich das Kraftfahrzeug, treten infolge eines Fahrtwindes horizontale Beschleunigungskräfte auf, deren Größe von der Fahrzeuggeschwindigkeit abhängt. Infolgedessen wird der Strahl 26 abgelenkt und trifft anstelle der ursprünglichen Position 38 nunmehr die Fahrzeugscheibe 24 in der Position 40. Dies kann insbesondere nachteilig sein, wenn die Position 38 derart gewählt wurde, daß sie einen optimalen Betrieb einer hier nicht dargestellten Wischanlage ermöglicht.

In der Figur 4 bewegt sich das Fahrzeug mit einer gegebenen Geschwindigkeit, bei der infolge der auftretenden Beschleunigungskräfte der Strahl 26 die Windschutzscheibe 24 in einer Position 40 treffen würde. Über die Steuerungseinrichtung 30 wird in diesem Fall jedoch der Fördereinrichtung 12 eine entsprechend erhöhte Tastfrequenz vorgegeben, so daß sich der Förderdruck, und damit die Austrittsgeschwindigkeit des Fluids, erhöht. Infolgedessen trifft der Strahl 26 die Windschutzscheibe in der Position 38.

Mittels der Steuerungseinrichtung 30 kann eine Anpassung der Tastfrequenz stufenweise oder kontinuierlich zu einer vorgegebenen Kennlinie erfolgen. Auf diese Weise kann eine optimale Tastfrequenz der Versorgungsspannung der Fördereinrichtung 12 vorgegeben werden, bei der der Strahl 26 immer in der Position 38 die Fahrzeugscheibe 24 trifft.

## Patentansprüche

1. Reinigungsanlage für Fahrzeugscheiben oder dergleichen von Kraftfahrzeugen, mit einer hydraulischen Fördereinrichtung, die unter Druckerhöhung ein Fluid von einem Vorratsbehälter zu wenigstens einer Austrittsvorrichtung fördert, **dadurch gekennzeichnet**, daß der Fördereinrichtung (12) eine Steuerungseinrichtung (30) zugeordnet ist, mittels der der Förderdruck der Fördereinrichtung (12) in Abhängigkeit einer Fahrzeuggeschwindigkeit steuerbar ist.

2. Reinigungsanlage nach Anspruch 1, **dadurch gekennzeichnet**, daß die Austrittsvorrichtung (16) eine Düse (22), insbesondere eine Ventildüse, aufweist.

3. Reinigungsanlage nach einem der vorhergehenden Ansprüche, **dadurch gekennzeichnet**, daß die Fördereinrichtung (12) eine Pumpe, insbesondere eine Hochdruckpumpe, ist.

4. Verfahren zum Betrieb einer Reinigungsanlage für Fahrzeugscheiben oder dergleichen in Kraftfahrzeugen, mit einer hydraulischen Fördereinrichtung, die unter Druckerhöhung ein Fluid von einem Vorratsbehälter zu wenigstens einer Austrittsvorrichtung fördert, **dadurch gekennzeichnet**, daß ein Förderdruck der Fördereinrichtung in Abhängigkeit einer Fahrzeuggeschwindigkeit gesteuert wird.

5. Verfahren nach Anspruch 4, **dadurch gekennzeichnet**, daß durch eine Steuerungseinrichtung (30) eine Tastfrequenz einer Versorgungsspannung der Fördereinrichtung (12) vorgegeben wird.

6. Verfahren nach Anspruch 5, **dadurch gekennzeichnet**, daß eine Anpassung der Tastfrequenz an die Fahrzeuggeschwindigkeit in Stufen oder kontinuierlich aus einer Kennlinie erfolgt.
